(19) Europäisches Patentamt

European Patent Office

Office européen des brevets

(11) **EP 4 617 090 A1**

(12) **EUROPEAN PATENT APPLICATION**
published in accordance with Art. 153(4) EPC

(43) Date of publication:
**17.09.2025 Bulletin 2025/38**

(21) Application number: **23887693.2**

(22) Date of filing: **28.09.2023**

(51) International Patent Classification (IPC):
*B60H 1/32* (2006.01)    *B60H 1/00* (2006.01)
*F25D 11/00* (2006.01)    *F24F 11/00* (2018.01)

(86) International application number:
**PCT/CN2023/122474**

(87) International publication number:
**WO 2024/099000 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.11.2022  CN 202211411649**

(71) Applicant: **Nio Technology (Anhui) Co., Ltd Hefei City, Anhui 230601 (CN)**

(72) Inventors:
• **SU, Xing**
 **Hefei, Anhui 230601 (CN)**
• **ZHANG, Ziqi**
 **Hefei, Anhui 230601 (CN)**
• **JIANG, Limin**
 **Hefei, Anhui 230601 (CN)**

(74) Representative: **Vossius & Partner Patentanwälte Rechtsanwälte mbB Siebertstrasse 3 81675 München (DE)**

(54) **METHOD AND APPARATUS FOR IMPROVING OPERATING RELIABILITY OF COMPRESSOR**

(57) Disclosed are a method and apparatus for improving the operating reliability of a compressor, a computer storage medium, a computer device, and an air conditioning system. The method for improving the operating reliability of the compressor includes the following steps: A, obtaining, in real time, a set of measurements of a suction pressure, of a suction temperature, of a discharge pressure, and of a discharge temperature of the compressor; B, detecting whether the set of measurements of the suction temperature and of the discharge temperature are abnormal; and C, setting, in response to detecting that the set of measurements of the suction temperature or of the discharge temperature is abnormal, the abnormal set of measurements to be equal to a set of theoretical values, wherein the set of theoretical values is determined at least in part on the basis of the sets of measurements that are not abnormal.

FIG. 1

**Description**

## TECHNICAL FIELD

The disclosure relates to the technical field of air conditioning, and more particularly to a method for improving the operating reliability of a compressor, an apparatus for improving the operating reliability of a compressor, a computer storage medium, a computer device, and an air conditioning system.

## BACKGROUND ART

An air conditioning system mainly includes a compressor for compressing a refrigerant, a condenser for condensing the refrigerant compressed by the compressor to liquefy the refrigerant, an expansion valve for expanding the refrigerant condensed and liquefied by the condenser, and an evaporator for evaporating the refrigerant expanded by the expansion valve and using latent heat of evaporation of the refrigerant to cool air blown into a room. The air conditioning system is generally provided with a pressure sensor and a temperature sensor on each of a suction side and a discharge side of the compressor, so as to ensure the normal operation of the air conditioning system by real-time monitoring of the suction pressure, the suction temperature, the discharge pressure and the discharge temperature of the compressor measured by the pressure sensors and the temperature sensors.

At present, when abnormalities in the suction temperature and the discharge temperature of the compressor are monitored (for example, the suction temperature and the discharge temperature of the compressor are outside safe operating ranges), the compressor needs to be shut down to ensure the safety of the air conditioning system. However, the shutdown of the compressor will result in the inability of the air conditioning system to provide an air conditioning service to a user. When the air conditioning system is applied to a vehicle, the shutdown of the compressor will result in the inability to cool down a battery of the vehicle and other vehicle components that need to be cooled in addition to the inability to provide the air conditioning service to the user, thereby affecting the user's ride experience and the safety performance of the vehicle.

## SUMMARY

In order to solve or at least alleviate one or more of the above problems, the following technical solutions are provided.

According to a first aspect of the disclosure, there is provided a method for improving the operating reliability of a compressor, the method including the following steps: A, obtaining, in real time, a set of measurements of a suction pressure, of a suction temperature, of a discharge pressure, and of a discharge temperature of the compressor; B, detecting whether the set of measurements of the suction temperature and of the discharge temperature are abnormal; and C, setting, in response to detecting that the set of measurements of the suction temperature or of the discharge temperature is abnormal, the abnormal set of measurements to be equal to a set of theoretical values, wherein the set of theoretical values is determined at least in part on the basis of the sets of measurements that are not abnormal.

In the method for improving the operating reliability of a compressor according to an embodiment of the disclosure, step C includes: setting, in response to detecting that the set of measurements of the suction temperature is abnormal, the abnormal set of measurements of the suction temperature to be equal to a set of theoretical values of the suction temperature, wherein the set of theoretical values of the suction temperature is determined at least in part on the basis of the set of measurements of the suction pressure, of the discharge temperature, and of the discharge pressure of the compressor.

In the method for improving the operating reliability of a compressor according to an embodiment or any one of the above embodiments of the disclosure, step C includes: setting, in response to detecting that the set of measurements of the discharge temperature is abnormal, the abnormal set of measurements of the discharge temperature to be equal to a set of theoretical values of the discharge temperature, wherein the set of theoretical values of the discharge temperature is determined at least in part on the basis of the set of measurements of the suction pressure, of the suction temperature, and of the discharge pressure of the compressor.

In the method for improving the operating reliability of a compressor according to an embodiment or any one of the above embodiments of the disclosure, detecting that the set of measurements of the suction temperature or of the discharge temperature is abnormal includes: detecting that the number of successive measurements among the set of measurements of the suction temperature or of the discharge temperature that are outside a preset safety range is greater than a preset threshold; and/or detecting that the number of measurements among the set of measurements of the suction temperature or of the discharge temperature that are obtained within a first predetermined time period and outside the preset safety range is greater than a preset threshold.

In the method for improving the operating reliability of a compressor according to an embodiment or any one of the above embodiments of the disclosure, determining the set of theoretical values of the suction temperature includes: creating a set of initial values of the suction temperature; determining a set of initial values of an entropy of a suction-side refrigerant and a set of initial values of an enthalpy of the suction-side refrigerant on the basis of the set of measurements of the suction pressure and the set of initial values of the suction temperature; determining a set of initial values of an isentropic discharge enthalpy on the basis of the set of measurements of the discharge temperature and the set of initial values of the entropy of the suction-side refrigerant; determining a set of initial values of a discharge enthalpy of the compressor on the basis of the set of initial values of the isentropic discharge enthalpy, an isentropic efficiency, and the set of initial values of the enthalpy of the suction-side refrigerant; determining a set of initial values of the discharge temperature on the basis of the set of measurements of the discharge pressure and the set of initial values of the discharge enthalpy of the compressor; and comparing the set of initial values of the discharge temperature with the set of measurements of the discharge temperature and determining the set of theoretical values of the suction temperature on the basis of a comparison result.

In the method for improving the operating reliability of a compressor according to an embodiment or any one of the above embodiments of the disclosure, determining the set of theoretical values of the suction temperature on the basis of the comparison result includes: determining, if the set of initial values of the discharge temperature is equal to the set of measurements of the discharge temperature, the set of theoretical values of the suction temperature to be equal to the set of initial values of the suction temperature; and making, if the set of initial values of the discharge temperature is not equal to the set of measurements of the discharge temperature, the set of initial values of the discharge temperature equal to the set of measurements of the discharge temperature by adjusting the set of initial values of the suction temperature, and determining the set of theoretical values of the suction temperature to be equal to the adjusted set of initial values of the suction temperature.

In the method for improving the operating reliability of a compressor according to an embodiment or any one of the above embodiments of the disclosure, determining the set of theoretical values of the discharge temperature includes: determining a set of entropy values of the suction-side refrigerant and a set of enthalpy values of the suction-side refrigerant on the basis of the set of measurements of the suction pressure and of the suction temperature; determining a set of isentropic discharge enthalpy values on the basis of the set of measurements of the discharge pressure and the set of entropy values of the suction-side refrigerant; determining a set of actual values of the discharge enthalpy of the compressor on the basis of the set of isentropic discharge enthalpy values, the isentropic efficiency, and the set of enthalpy values of the suction-side refrigerant; and determining the set of theoretical values of the discharge temperature on the basis of the set of measurements of the discharge pressure and the set of actual values of the discharge enthalpy of the compressor.

In the method for improving the operating reliability of a compressor according to an embodiment or any one of the above embodiments of the disclosure, the method further includes: setting, in response to detecting that an abnormality in the abnormal set of measurements disappears for a second predetermined time period, the set of theoretical values to be equal to the corresponding set of measurements.

In the method for improving the operating reliability of a compressor according to an embodiment or any one of the above embodiments of the disclosure, detecting that the abnormality in the abnormal set of measurements disappears includes: detecting that the number of successive measurements among the abnormal set of measurements that are outside the preset safety range is less than or equal to a preset threshold; and detecting that the number of measurements among the abnormal set of measurements that are obtained within the first predetermined time period and outside the preset safety range is less than or equal to a preset threshold.

According to a second aspect of the disclosure, there is provided an apparatus for improving the operating reliability of a compressor, the apparatus including: an obtaining unit configured to obtain, in real time, a set of measurements of a suction pressure, of a suction temperature, of a discharge pressure, and of a discharge temperature of the compressor; a detection unit configured to detect whether the set of measurements of the suction temperature and of the discharge temperature are abnormal; and a processing unit configured to set, in response to detecting that the set of measurements of the suction temperature or of the discharge temperature is abnormal, the abnormal set of measurements to be equal to a set of theoretical values, wherein the set of theoretical values is determined at least in part on the basis of the sets of measurements that are not abnormal.

In the apparatus for improving the operating reliability of a compressor according to an embodiment of the disclosure, the processing unit is further configured to: set, in response to detecting that the set of measurements of the suction temperature is abnormal, the abnormal set of measurements of the suction temperature to be equal to a set of theoretical values of the suction temperature, wherein the set of theoretical values of the suction temperature is determined at least in part on the basis of the set of measurements of the suction pressure, of the discharge temperature, and of the discharge pressure of the compressor.

In the apparatus for improving the operating reliability of a compressor according to an embodiment or any one of the above embodiments of the disclosure, the processing unit is further configured to: set, in response to detecting that the set of measurements of the discharge temperature is abnormal, the abnormal set of measurements of the discharge temperature to be equal to a set of theoretical values of the discharge temperature, wherein the set of theoretical values of the discharge temperature is determined at least in part on the basis of the set of measurements of the suction pressure, of the suction temperature, and of the discharge pressure of the compressor.

In the apparatus for improving the operating reliability of a compressor according to an embodiment or any one of the above embodiments of the disclosure, the detection unit determines that the set of measurements of the suction temperature or of the discharge temperature is abnormal based on: detecting that the number of successive measurements among the set of measurements of the suction temperature or of the discharge temperature that are outside a preset safety range is greater than a preset threshold; and/or detecting that the number of measurements among the set of measurements of the suction temperature or of the discharge temperature that are obtained within a first predetermined time period and outside the preset safety range is greater than a preset threshold.

In the apparatus for improving the operating reliability of a compressor according to an embodiment or any one of the above embodiments of the disclosure, the processing unit is configured to determine the set of theoretical values of the suction temperature by: creating a set of initial values of the suction temperature; determining a set of initial values of an entropy of a suction-side refrigerant and a set of initial values of an enthalpy of the suction-side refrigerant on the basis of the set of measurements of the suction pressure and the set of initial values of the suction temperature; determining a set of initial values of an isentropic discharge enthalpy on the basis of the set of measurements of the discharge temperature and the set of initial values of the entropy of the suction-side refrigerant; determining a set of initial values of a discharge enthalpy of the compressor on the basis of the set of initial values of the isentropic discharge enthalpy, an isentropic efficiency, and the set of initial values of the enthalpy of the suction-side refrigerant; determining a set of initial values of the discharge temperature on the basis of the set of measurements of the discharge pressure and the set of initial values of the discharge enthalpy of the compressor; and comparing the set of initial values of the discharge temperature with the set of measurements of the discharge temperature and determining the set of theoretical values of the suction temperature on the basis of a comparison result.

In the apparatus for improving the operating reliability of a compressor according to an embodiment or any one of the above embodiments of the disclosure, the processing unit is configured to determine the set of theoretical values of the suction temperature on the basis of the comparison result by: determining, if the set of initial values of the discharge temperature is equal to the set of measurements of the discharge temperature, the set of theoretical values of the suction temperature to be equal to the set of initial values of the suction temperature; and making, if the set of initial values of the discharge temperature is not equal to the set of measurements of the discharge temperature, the set of initial values of the discharge temperature equal to the set of measurements of the discharge temperature by adjusting the set of initial values of the suction temperature, and determining the set of theoretical values of the suction temperature to be equal to the adjusted set of initial values of the suction temperature.

In the apparatus for improving the operating reliability of a compressor according to an embodiment or any one of the above embodiments of the disclosure, the processing unit is configured to determine the set of theoretical values of the discharge temperature by: determining a set of entropy values of the suction-side refrigerant and a set of enthalpy values of the suction-side refrigerant on the basis of the set of measurements of the suction pressure and of the suction temperature; determining a set of isentropic discharge enthalpy values on the basis of the set of measurements of the discharge pressure and the set of entropy values of the suction-side refrigerant; determining a set of actual values of the discharge enthalpy of the compressor on the basis of the set of isentropic discharge enthalpy values, the isentropic efficiency, and the set of enthalpy values of the suction-side refrigerant; and determining the set of theoretical values of the discharge temperature on the basis of the set of measurements of the discharge pressure and the set of actual values of the discharge enthalpy of the compressor.

In the apparatus for improving the operating reliability of a compressor according to an embodiment or any one of the above embodiments of the disclosure, the processing unit is further configured to: set, in response to detecting that an abnormality in the abnormal set of measurements disappears for a second predetermined time period, the set of theoretical values to be equal to the corresponding set of measurements.

In the apparatus for improving the operating reliability of a compressor according to an embodiment or any one of the above embodiments of the disclosure, the detection unit determines that the abnormality in the abnormal set of measurements disappears is detected based on: detecting that the number of successive measurements among the abnormal set of measurements that are outside the preset safety range is less than or equal to a preset threshold; and detecting that the number of measurements among the abnormal set of measurements that are obtained within the first predetermined time period and outside the preset safety range is less than or equal to a preset threshold.

According to a third aspect of the disclosure, there is provided a computer storage medium, including instructions, where when the instructions are run, the steps of the method for improving the operating reliability of a compressor according to the first aspect of the disclosure are performed.

According to a fourth aspect of the disclosure, there is provided a computer device, including a memory, a processor, and a computer program stored on the memory and executable on the processor, where the computer program, when executed by the processor, causes the processor to carry out the steps of the method for improving the operating reliability of a compressor according to the first aspect of the disclosure.

According to a fifth aspect of the disclosure, there is provided an air conditioning system, including the apparatus for improving the operating reliability of a compressor according to the second aspect of the disclosure.

The solution for improving the operating reliability of a compressor according to one or more embodiments of the disclosure makes it possible to replace, when the set of measurements of the suction temperature or of the discharge temperature of the compressor is abnormal, the abnormal set of measurements with a corresponding set of theoretical values, thereby ensuring uninterrupted operation of the compressor, so that the air conditioning system can continuously provide an air conditioning service to a passenger and cool down a battery of the vehicle and other vehicle components that need to be cooled, improving the user's ride experience and the safety performance of the vehicle.

## BRIEF DESCRIPTION OF THE DRAWINGS

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:

FIG. 1 is a flow chart of a method for improving the operating reliability of a compressor according to one or more embodiments of the disclosure.

FIG. 2 is a flow chart of a method for improving the operating reliability of a compressor according to one or more embodiments of the disclosure.

FIG. 3 is a block diagram of an apparatus for improving the operating reliability of a compressor according to one or more embodiments of the disclosure.

FIG. 4 is a block diagram of a computer device according to an embodiment of the disclosure.

## DETAILED DESCRIPTION OF EMBODIMENTS

The following descriptions of the specific embodiments are merely exemplary in nature, and are not intended to limit the disclosed technologies or the application and use of the disclosed technologies. In addition, there is no intention to be bound by any expressed or implied theory presented in the foregoing Technical Field and Background Art, or the following Detailed Description.

In the following detailed descriptions of the embodiments, many specific details are set forth to provide a more thorough understanding of the disclosed technologies. However, it is obvious for those of ordinary skill in the art that the disclosed technologies can be practiced without these specific details. In other instances, well-known features are not detailed, to avoid complicating the descriptions unnecessarily.

The terms such as "include" and "comprise" are used to indicate that in addition to units and steps that are directly and clearly described in this specification, other units and steps that are not directly or clearly described are not excluded in the technical solutions of the disclosure. The terms such as "first" and "second" are not used to indicate sequences of the units in terms of time, space, size, etc., and are merely used to distinguish between the units.

Various exemplary embodiments according to the disclosure will be described below in detail with reference to the accompanying drawings.

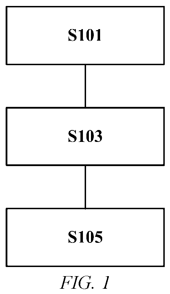

FIG. 1 is a flow chart of a method for improving the operating reliability of a compressor according to one or more embodiments of the disclosure.

As shown in FIG. 1, in step S101, a set of measurements of a suction pressure, of a suction temperature, of a discharge pressure, and of a discharge temperature of the compressor are obtained in real time.

Optionally, in step S101, the suction pressure on a low-pressure side of the compressor (i.e., a suction port of the compressor) may be measured by a pressure sensor mounted on the low-pressure side of the compressor, the suction temperature on the low-pressure side of the compressor may be measured by a temperature sensor mounted on the low-pressure side of the compressor, the discharge pressure on a high-pressure side of the compressor (i.e., a discharge port of the compressor) may be measured by a pressure sensor mounted on the high-pressure side of the compressor, and the discharge temperature on the high-pressure side of the compressor may be measured by a temperature sensor mounted on the high-pressure side of the compressor, thereby obtaining, in real time, the set of measurements of the suction pressure, of the suction temperature, of the discharge pressure, and of the discharge temperature of the compressor. Optionally, pressure and temperature signals collected by the pressure and temperature sensors described above may be analyzed and processed to obtain the corresponding sets of measurements. The specific analysis and processing include filtering, analog-to-digital conversion, etc.

In step S103, it is detected whether the set of measurements of the suction temperature and of the discharge temperature obtained in real time in step S 101 are abnormal. It should be noted that an abnormality in the set of measurements of the suction temperature and of the discharge temperature may be caused by the failure of the temperature sensors on the low-pressure side and the high-pressure side of the compressor, or may be caused by other environmental factors, resulting in no change in the output of a transmitter, an unstable output signal, a large output error of the transmitter, etc. when the temperature of a measured medium increases or decreases.

Optionally, in step S103, it is possible to detect whether the set of measurements of the suction temperature and of the discharge temperature are abnormal by determining whether the respective measurements in the set of measurements of the suction temperature and of the discharge temperature fall within a preset safety range. The preset safety range for determining whether the measurements are abnormal may be set according to various factors, such as, but not limited to, structural parameters of the compressor and the sensitivity requirements for abnormality detection. By way of example, the preset safety range may be set to 0 degrees Celsius to 130 degrees Celsius.

In an embodiment, it is possible to detect whether the number of successive measurements among the set of measurements of the suction temperature and of the discharge temperature that are outside the preset safety range is greater than a preset threshold, or to detect whether the number of measurements among the set of measurements of the suction temperature and of the discharge temperature that are obtained within a specific time period and outside the preset safety range is greater than a preset threshold, to determine whether the set of measurements of the suction temperature and of the discharge temperature are abnormal. In an example, when it is detected that the number of successive measurements among the set of measurements of the suction temperature or of the discharge temperature that are outside the preset safety range is greater than the preset threshold, it can be determined that the set of measurements is abnormal. In an example, when it is detected that the number of measurements among the set of measurements of the suction temperature or of the discharge temperature that are obtained within the specific time period and outside the preset safety range is greater than the preset threshold, it can be determined that the set of measurements is abnormal. By way of example, when it is detected that the number of successive measurements among the set of measurements of the suction temperature that are outside the preset safety range is greater than 5, it can be determined that the set of measurements of the suction temperature is abnormal. By way of example, when the number of measurements among the set of measurements of the discharge temperature that are obtained within 2 seconds and outside the preset safety range is greater than 5, it can be determined that the set of measurements of the discharge temperature is abnormal.

In step S105, when it is detected that the set of measurements of the suction temperature or of the discharge temperature is abnormal, the abnormal set of measurements is set to be equal to a set of theoretical values. The set of theoretical values is determined at least in part on the basis of the sets of measurements that are not abnormal.

Optionally, in step S105, when it is detected that the set of measurements of the discharge temperature is abnormal, the abnormal set of measurements of the discharge temperature is set to be equal to a set of theoretical values of the discharge temperature, wherein the set of theoretical values of the discharge temperature is determined at least in part on the basis of the set of measurements of the suction pressure, of the suction temperature, and of the discharge pressure of the compressor that are obtained in step S101.

Specifically, it is possible to determine the set of theoretical values $T_{dis}$ of the discharge temperature on the basis of the set of measurements $P_{suc}$ of the suction pressure, the set of measurements $T_{suc}$ of the suction temperature and the set of measurements $P_{dis}$ of the discharge pressure of the compressor by the following calculation process:

$$T_{dis} = T(P_{dis}, H_{dis}) \qquad (1)$$

where $H_{dis}$ represents a set of actual values of a discharge enthalpy of the compressor, and $T$ represents the functional mapping between the set of measurements of the discharge pressure $P_{dis}$, the set of actual values of the discharge enthalpy of the compressor $H_{dis}$ and the set of theoretical values $T_{dis}$ of the discharge temperature. Further, the set of actual values $H_{dis}$ of the discharge enthalpy of the compressor may be calculated by the following formula (2):

$$H_{dis} = \frac{H_{isen,dis} - H_{suc}}{\eta_{isen-effi}} + H_{suc} \qquad (2)$$

where $\eta_{isen-effi}$ represents an isentropic efficiency of the compressor, $H_{suc}$ represents a set of enthalpy values of a suction-side refrigerant, and $H_{isen,dis}$ represents a set of isentropic discharge enthalpy values. It should be noted that the compression process of the compressor may be approximated as an adiabatic isentropic process, that is, neither external heat transfer nor friction loss is considered. In this case, the isentropic efficiency $\eta_{isen-effi}$ of the compressor can be used as the indicative efficiency of the compressor, which can be determined by a quotient obtained by dividing the isentropic power consumption by the actual power consumption.

The set of enthalpy values $H_{suc}$ of the suction-side refrigerant may be calculated by the following formula (3):

$$H_{suc} = H(P_{suc}, T_{suc}) \qquad (3)$$

wherein $H$ represents a corresponding physical property table between the enthalpy of the refrigerant and the set of measurements $P_{suc}$ of the suction pressure and the set of measurements $T_{suc}$ of the suction temperature, so that the set of enthalpy values $H_{suc}$ of the suction-side refrigerant can be found out by obtaining the type of the refrigerant, the set of measurements $P_{suc}$ of the suction pressure and the set of measurements $T_{suc}$ of the suction temperature, and by using the corresponding physical property table between the enthalpy of the refrigerant and $P_{suc}$ and $T_{suc}$.

The set of isentropic discharge enthalpy values $H_{isen,dis}$ may be calculated by the following formula (4):

$$H_{isen,dis} = H(P_{dis}, S_{suc}) \tag{4}$$

where $S_{suc}$ represents a set of entropy values of the suction-side refrigerant, $H$ represents the functional mapping between the set of measurements $P_{dis}$ of the discharge pressure, the set of entropy values $S_{suc}$ of the suction-side refrigerant and the set of isentropic discharge enthalpy values $H_{isen,dis}$. Further, the set of entropy values $S_{suc}$ of the suction-side refrigerant may be calculated by the following formula (5):

$$S_{suc} = S(P_{suc}, T_{suc}) \tag{5}$$

wherein $S$ represents a corresponding physical property table between the entropy of the refrigerant and the set of measurements $P_{suc}$ of the suction pressure and the set of measurements $T_{suc}$ of the suction temperature, so that the set of entropy values $S_{suc}$ of the suction-side refrigerant can be found out by obtaining the type of the refrigerant, the set of measurements $P_{suc}$ of the suction pressure and the set of measurements $T_{suc}$ of the suction temperature, and by using the corresponding physical property table between the entropy of the refrigerant and $P_{suc}$ and $T_{suc}$.

Optionally, in step S105, when it is detected that the set of measurements of the suction temperature is abnormal, the abnormal set of measurements of the suction temperature is set to be equal to a set of theoretical values of the suction temperature, wherein the set of theoretical values of the suction temperature is determined at least in part on the basis of the set of measurements of the suction pressure, of the discharge temperature, and of the discharge pressure of the compressor that are obtained in step S101.

Specifically, it is possible to determine the set of theoretical values $T_{suc}$ of the suction temperature on the basis of the set of measurements $P_{suc}$ of the suction pressure, the set of measurements $T_{dis}$ of the discharge temperature and the set of measurements $P_{dis}$ of the discharge pressure of the compressor by the following calculation process.

First, a set of initial values $T_{suc,ini}$ of the suction temperature is created.

Second, a set of initial values $S_{suc,ini}$ of an entropy of the suction-side refrigerant is determined on the basis of the set of measurements $P_{suc}$ of the suction pressure and the created set of initial values $T_{suc,ini}$ of the suction temperature by the following formula (6):

$$S_{suc,ini} = S(P_{suc}, T_{suc,ini}) \tag{6}$$

wherein $S$ represents a corresponding physical property table between the entropy of the refrigerant and the set of measurements $P_{suc}$ of the suction pressure and the set of initial values $T_{suc,ini}$ of the suction temperature, so that the set of initial values $S_{suc,ini}$ of the entropy of the suction-side refrigerant can be found out by obtaining the type of the refrigerant, the set of measurements $P_{suc}$ of the suction pressure and the set of initial values $T_{suc,ini}$ of the suction temperature, and by using the corresponding physical property table between the entropy of the refrigerant and $P_{suc}$ and $T_{suc,ini}$.

Third, a set of initial values $H_{suc,ini}$ of an enthalpy of the suction-side refrigerant is determined on the basis of the set of measurements $P_{suc}$ of the suction pressure and the created set of initial values $T_{suc,ini}$ of the suction temperature by the following formula (7):

$$H_{suc,ini} = H(P_{suc}, T_{suc,ini}) \tag{7}$$

wherein $H$ represents a corresponding physical property table between the enthalpy of the refrigerant and the set of measurements $P_{suc}$ of the suction pressure and the set of initial values $T_{suc,ini}$ of the suction temperature, so that the set of initial values $H_{suc,ini}$ of the enthalpy of the suction-side refrigerant can be found out by obtaining the type of the refrigerant, the set of measurements $P_{suc}$ of the suction pressure and the set of initial values $T_{suc,ini}$ of the suction temperature, and by using the corresponding physical property table between the enthalpy of the refrigerant and $P_{suc}$ and $T_{suc,ini}$.

Fourth, a set of initial values $H_{isen,dis,ini}$ of an isentropic discharge enthalpy is determined on the basis of the set of measurements $T_{dis}$ of the discharge temperature and the set of initial values $S_{suc,ini}$ of the entropy of the suction-side refrigerant by the following formula (8):

$$H_{isen,dis,ini} = H\left(P_{dis}, S_{suc,ini}\right) \qquad (8)$$

where $H$ represents the functional mapping between the set of measurements $P_{dis}$ of the discharge pressure, the set of initial values $S_{suc,ini}$ of the entropy of the suction-side refrigerant and the set of initial values $H_{isen,dis,ini}$ of the isentropic discharge enthalpy.

Fifth, a set of initial values of a discharge enthalpy of the compressor is determined on the basis of the set of initial values $H_{isen,dis,ini}$ of the isentropic discharge enthalpy, an isentropic efficiency $\eta_{isen\text{-}effi}$, and the set of initial values $H_{suc,ini}$ of the enthalpy of the suction-side refrigerant by the following formula (9):

$$H_{dis,ini} = \frac{H_{isen,dis,ini} - H_{suc,ini}}{\eta_{isen-effi}} + H_{suc,ini} \qquad (9)$$

where $\eta_{isen\text{-}effi}$ represents the isentropic efficiency of the compressor, the set of initial values $H_{isen,dis,ini}$ of the isentropic discharge enthalpy can be obtained by the above formula (8), and the set of initial values $H_{suc,ini}$ of the enthalpy of the suction-side refrigerant can be obtained by the above formula (7).

Sixth, a set of initial values $T_{dis,ini}$ of the discharge temperature is determined on the basis of the set of measurements $P_{dis}$ of the discharge pressure and the set of initial values $H_{dis,ini}$ of the discharge enthalpy of the compressor by the following formula (10):

$$T_{dis,ini} = T\left(P_{dis}, H_{dis,ini}\right) \qquad (10)$$

where $T$ represents the functional mapping between the set of measurements $P_{dis}$ of the discharge pressure, the set of initial values $H_{dis,ini}$ of the discharge enthalpy of the compressor and the set of initial values $T_{dis,ini}$ of the discharge temperature, and the set of initial values $H_{dis,ini}$ of the discharge enthalpy of the compressor can be obtained by the above formula (9).

Seventh, the set of initial values $T_{dis,ini}$ of the discharge temperature is compared with the set of measurements $T_{dis}$ of the discharge temperature and the set of theoretical values $T_{suc}$ of the suction temperature is determined on the basis of a comparison result. Specifically, if the set of initial values $T_{dis,ini}$ of the discharge temperature is equal to the set of measurements $T_{dis}$ of the discharge temperature, the set of theoretical values $T_{suc}$ of the suction temperature is determined to be equal to the created set of initial values $T_{suc,ini}$ of the suction temperature; and if the set of initial values $T_{dis,ini}$ of the discharge temperature is not equal to the set of measurements $T_{di}$, of the discharge temperature, the set of initial values $T_{dis,ini}$ of the discharge temperature is made equal to the set of measurements $T_{dis}$ of the discharge temperature by adjusting the created set of initial values $T_{suc,ini}$ of the suction temperature, and the set of theoretical values $T_{suc}$ of the suction temperature is determined to be equal to the adjusted set of initial values $T_{suc,ini}$ of the suction temperature.

The set of theoretical values of the discharge temperature and the set of theoretical values of the suction temperature can be determined quickly and accurately by means of the above calculation process, so as to replace, when the set of measurements of the suction temperature or of the discharge temperature is abnormal, the abnormal set of measurements of the suction temperature or of the discharge temperature with the corresponding set of theoretical values, thereby avoiding the shutdown of the compressor when the set of measurements of the suction temperature or of the discharge temperature is abnormal, and ensuring uninterrupted operation of the compressor.

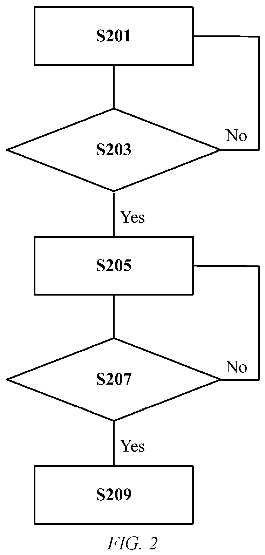

FIG. 2 is a flow chart of a method for improving the operating reliability of a compressor according to one or more embodiments of the disclosure.

As shown in FIG. 2, in step S201, a set of measurements of a suction pressure, of a suction temperature, of a discharge pressure, and of a discharge temperature of the compressor are obtained in real time.

In step S203, it is detected whether the set of measurements of the suction temperature and of the discharge temperature are abnormal. Optionally, in step S203, it is possible to detect whether the set of measurements of the suction temperature and of the discharge temperature are abnormal by determining whether the respective measurements in the set of measurements of the suction temperature and of the discharge temperature fall within a preset safety range.

In an embodiment, it is possible to detect whether the number of successive measurements among the set of measurements of the suction temperature and of the discharge temperature that are outside the preset safety range is greater than a preset threshold, or to detect whether the number of measurements among the set of measurements of the suction temperature and of the discharge temperature that are obtained within a specific time period and outside the preset safety range is greater than a preset threshold, to determine whether the set of measurements of the suction temperature and of the discharge temperature are abnormal. When it is detected that the number of successive measurements among the set of measurements of the suction temperature or of the discharge temperature that are outside the preset safety range is greater than the preset threshold, or that the number of measurements among the set of measurements of the suction temperature or of the discharge temperature that are obtained within the specific time period and outside the preset safety range is greater than the preset threshold, it can be determined that the set of measurements of the suction temperature or of the discharge temperature is abnormal, in which case the process proceeds to step S205; otherwise, the process proceeds to step S201.

In step S205, the abnormal set of measurements is set to be equal to a set of theoretical values. The set of theoretical values is determined at least in part on the basis of the sets of measurements that are not abnormal.

Optionally, in step S205, when it is detected that the set of measurements of the discharge temperature is abnormal, the abnormal set of measurements of the discharge temperature is set to be equal to a set of theoretical values of the discharge temperature, wherein the set of theoretical values of the discharge temperature is determined at least in part on the basis of the set of measurements of the suction pressure, of the suction temperature, and of the discharge pressure of the compressor that are obtained in step S201. Specifically, the set of theoretical values of the discharge temperature can be determined with reference to the calculation process described in FIG. 1 with respect to step S105.

Optionally, in step S205, when it is detected that the set of measurements of the suction temperature is abnormal, the abnormal set of measurements of the suction temperature is set to be equal to a set of theoretical values of the suction temperature, wherein the set of theoretical values of the suction temperature is determined at least in part on the basis of the set of measurements of the suction pressure, of the discharge temperature, and of the discharge pressure of the compressor that are obtained in step S201. Specifically, the set of theoretical values of the suction temperature can be determined with reference to the calculation process described in FIG. 1 with respect to step S105.

In step S207, it is determined whether the abnormality in the abnormal set of measurements is removed. When it is determined that the abnormality in the abnormal set of measurements is removed, the process proceeds to step S209; otherwise, the process proceeds to step S205.

Optionally, in step S207, when it is determined that the abnormality in the abnormal set of measurements disappears for a second predetermined time period (e.g., 5 seconds), it can be determined that the abnormality in the abnormal set of measurements has been removed. Optionally, when it is determined that the number of successive measurements among the abnormal set of measurements that are outside the preset safety range is less than or equal to the preset threshold and the number of measurements among the abnormal set of measurements that are obtained within a first predetermined time period (e.g., 2 seconds) and outside the preset safety range is less than or equal to the preset threshold, it can be determined that the abnormality in the abnormal set of measurements has been disappeared.

When it is determined that the abnormality in the abnormal set of measurements is removed, the process proceeds to step S209. In step S209, the set of theoretical values set for the abnormal set of measurements in step S205 is modified to its corresponding set of measurements.

The method for improving the operating reliability of a compressor according to an aspect of the disclosure makes it possible to replace, when the set of measurements of the suction temperature or of the discharge temperature of the compressor is abnormal, the abnormal set of measurements with the corresponding set of theoretical values, thereby ensuring uninterrupted operation of the compressor, so that the air conditioning system can continuously provide an air conditioning service to a passenger and cool down a battery of the vehicle and other vehicle components that need to be cooled, improving the user's ride experience and the safety performance of the vehicle.

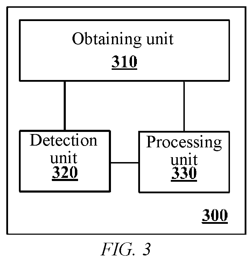

FIG. 3 is a block diagram of an apparatus for improving the operating reliability of a compressor according to one or more embodiments of the disclosure.

As shown in FIG. 3, the apparatus 300 for improving the operating reliability of a compressor includes an obtaining unit 310, a detection unit 320 and a processing unit 330. In accordance with one or more embodiments of the disclosure, the apparatus 300 for improving the operating reliability of a compressor shown in FIG. 3 may be applied in an air conditioning system, such as an on-board air conditioning system.

The obtaining unit 310 may be configured to obtain, in real time, a set of measurements of a suction pressure, of a suction temperature, of a discharge pressure, and of a discharge temperature of the compressor and send the obtained set of measurements to the detection unit 320 and the processing unit 330. Optionally, the obtaining unit 310 may be implemented by a pressure sensor and a temperature sensor mounted on the low-pressure side of the compressor (i.e., the suction port of the compressor) and a pressure sensor and a temperature sensor mounted on the high-pressure side of the compressor (i.e., the discharge port of the compressor).

In an embodiment, when the apparatus 300 for improving the operating reliability of a compressor shown in FIG. 3 is applied to an on-board air conditioning system, the pressure sensor and the temperature sensor mounted on the low-pressure side of the compressor (i.e., the suction port of the compressor) may be connected to an evaporator and a condenser. The evaporator is used to provide the air conditioning service to the vehicle user, and the condenser is used to cool down the battery of the vehicle and other vehicle components that need to be cooled. The pressure sensor and the temperature sensor mounted on the high-pressure side of the compressor (i.e., the discharge port of the compressor) may be connected to an evaporator refrigeration circuit and a battery cooling refrigeration circuit for further connection to the evaporator and the condenser.

The detection unit 320 may be configured to detect whether the set of measurements of the suction temperature and of the discharge temperature obtained by the obtaining unit 310 in real time are abnormal, and send a signal indicating whether the set of measurements of the suction temperature and of the discharge temperature are abnormal to the processing unit 330. Optionally, the detection unit 320 may be configured to detect whether the set of measurements of the suction temperature and of the discharge temperature are abnormal with reference to step S103 in FIG. 1.

The processing unit 330 may be configured to set the abnormal set of measurements to be equal to a corresponding set of theoretical values when receiving from the detection unit 320 a signal indicating that the set of measurements of the suction temperature or of the discharge temperature is abnormal. The set of theoretical values is determined at least in part on the basis of the sets of measurements that are not abnormal.

Optionally, when a signal indicating that the set of measurements of the discharge temperature is abnormal is received from the detection unit 320, the processing unit 330 may be configured to set the abnormal set of measurements of the discharge temperature to be equal to a set of theoretical values of the discharge temperature. The set of theoretical values of the discharge temperature is determined at least in part on the basis of the set of measurements of the suction pressure, of the suction temperature, and of the discharge pressure of the compressor that are obtained by the obtaining unit 310. Specifically, the set of theoretical values of the discharge temperature can be determined by the processing unit 330 with reference to the calculation process described in FIG. 1 with respect to step S105.

Optionally, when a signal indicating that the set of measurements of the suction temperature is abnormal is received from the detection unit 320, the processing unit 330 may be configured to set the abnormal set of measurements of the suction temperature to be equal to a set of theoretical values of the suction temperature. The set of theoretical values of the suction temperature is determined at least in part on the basis of the set of measurements of the suction pressure, of the discharge temperature, and of the discharge pressure of the compressor that are obtained by the obtaining unit 310. Specifically, the set of theoretical values of the suction temperature can be determined by the processing unit 330 with reference to the calculation process described in FIG. 1 with respect to step S105.

The processing unit 330 may also be configured to further determine whether the abnormality in the abnormal set of measurements is removed, and to modify the set of theoretical values set for the abnormal set of measurements to its corresponding set of measurements when determining that the abnormality in the abnormal set of measurements is removed. Optionally, the processing unit 330 may be configured to determine whether the abnormality in the abnormal set of measurements is removed with reference to step S207 in FIG. 2.

Optionally, the apparatus 300 for improving the operating reliability of a compressor may further include an alarm unit (not shown in FIG. 3). The alarm unit is connected to the detection unit 320, and performs an alarm operation in response to receiving from the detection unit 320 a signal indicating that the set of measurements of the suction temperature or of the discharge temperature is abnormal. By way of example, the alarm unit may be implemented by an LED display circuit. The LED display circuit may be arranged on a vehicle air conditioning panel. When the signal indicating that the set of measurements of the suction temperature or of the discharge temperature is abnormal is received from the detection unit 320, the LED display circuit is activated to alert the person in the vehicle. By way of example, the alarm unit may also be implemented by a buzzer circuit. When the signal indicating that the set of measurements of the suction temperature or of the discharge temperature is abnormal is received from the detection unit 320, the buzzer circuit is activated to generate a buzzer sound to alert the person in the vehicle.

The apparatus for improving the operating reliability of a compressor according to an aspect of the disclosure makes it possible to replace, when the set of measurements of the suction temperature or of the discharge temperature of the compressor is abnormal, the abnormal set of measurements with the corresponding set of theoretical values, thereby ensuring uninterrupted operation of the compressor, so that the air conditioning system can continuously provide the air conditioning service to the passenger and cool down the battery of the vehicle and other vehicle components that need to be cooled, improving the user's ride experience and the safety performance of the vehicle.

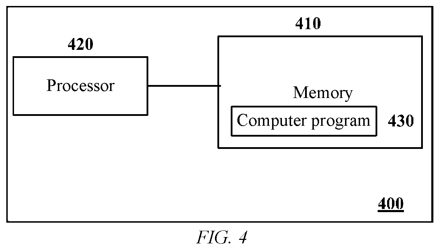

FIG. 4 is a block diagram of a computer device according to an embodiment of the disclosure. As shown in FIG. 4, a computer device 400 includes a memory 410, a processor 420, and a computer program 430 stored on the memory 410 and executable on the processor 420. The processor 420, when executing the computer program 430, implements the various steps of the method for improving the operating reliability of a compressor according to one or more embodiments of the disclosure.

In addition, as described above, the disclosure may also be implemented as a computer storage medium, which has stored therein a program for causing a computer to perform the method for improving the operating reliability of a compressor according to an aspect of the disclosure.

Here, various forms of computer storage media, such as disks (for example, a magnetic disk, an optical disc, etc.), cards (for example, a memory card, an optical card, etc.), semiconductor memories (for example, a read-only memory, a non-volatile memory, etc.), and tapes (for example, a magnetic tape, a cassette tape, etc.) may be used as the computer storage medium.

Various embodiments provided in the disclosure may be implemented by hardware, software, or a combination of hardware and software where applicable. In addition, without departing from the scope of the disclosure, various hardware components and/or software components described herein may be combined into a combined component including software, hardware, and/or both where applicable. Without departing from the scope of the disclosure, various hardware components and/or software components described herein may be separated into sub-components including software, hardware, or both where applicable. In addition, where applicable, it is contemplated that software components can be implemented as hardware components, and vice versa.

Software (such as program code and/or data) in the disclosure may be stored on one or more computer storage media. It is also contemplated that the software identified herein can be implemented using one or more general-purpose or special-purpose computers and/or computer systems, networked and/or otherwise. The steps described herein can be changed in order, combined into compound steps, and/or divided into sub-steps where applicable, to provide the features described herein.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

**Claims**

1.    A method for improving the operating reliability of a compressor, the method comprising the following steps:

   A, obtaining, in real time, a set of measurements of a suction pressure, of a suction temperature, of a discharge pressure, and of a discharge temperature of the compressor;
   B, detecting whether the set of measurements of the suction temperature and of the discharge temperature are abnormal; and
   C, setting, in response to detecting that the set of measurements of the suction temperature or of the discharge temperature is abnormal, the abnormal set of measurements to be equal to a set of theoretical values, wherein the set of theoretical values is determined at least in part on the basis of the sets of measurements that are not abnormal.

2.    The method according to claim 1, wherein step C comprises:

   setting, in response to detecting that the set of measurements of the suction temperature is abnormal, the abnormal set of measurements of the suction temperature to be equal to a set of theoretical values of the suction temperature, wherein the set of theoretical values of the suction temperature is determined at least in part on the basis of the set of measurements of the suction pressure, of the discharge temperature, and of the discharge pressure of the compressor; and
   setting, in response to detecting that the set of measurements of the discharge temperature is abnormal, the abnormal set of measurements of the discharge temperature to be equal to a set of theoretical values of the discharge temperature, wherein the set of theoretical values of the discharge temperature is determined at least in part on the basis of the set of measurements of the suction pressure, of the suction temperature, and of the discharge pressure of the compressor.

3.    The method according to claim 1, wherein detecting that the set of measurements of the suction temperature or of the discharge temperature is abnormal comprises:

   detecting that the number of successive measurements among the set of measurements of the suction temperature or of the discharge temperature that are outside a preset safety range is greater than a preset threshold; and/or
   detecting that the number of measurements among the set of measurements of the suction temperature or of the discharge temperature that are obtained within a first predetermined time period and outside the preset safety range is greater than a preset threshold;
   wherein determining the set of theoretical values of the suction temperature comprises:

      creating a set of initial values of the suction temperature;
      determining a set of initial values of an entropy of a suction-side refrigerant and a set of initial values of an enthalpy of the suction-side refrigerant on the basis of the set of measurements of the suction pressure and the set of initial values of the suction temperature;

determining a set of initial values of an isentropic discharge enthalpy on the basis of the set of measurements of the discharge temperature and the set of initial values of the entropy of the suction-side refrigerant;

determining a set of initial values of a discharge enthalpy of the compressor on the basis of the set of initial values of the isentropic discharge enthalpy, an isentropic efficiency, and the set of initial values of the enthalpy of the suction-side refrigerant;

determining a set of initial values of the discharge temperature on the basis of the set of measurements of the discharge pressure and the set of initial values of the discharge enthalpy of the compressor; and

comparing the set of initial values of the discharge temperature with the set of measurements of the discharge temperature and determining the set of theoretical values of the suction temperature on the basis of a comparison result;

wherein determining the set of theoretical values of the suction temperature on the basis of the comparison result comprises:

determining, if the set of initial values of the discharge temperature is equal to the set of measurements of the discharge temperature, the set of theoretical values of the suction temperature to be equal to the set of initial values of the suction temperature; and

making, if the set of initial values of the discharge temperature is not equal to the set of measurements of the discharge temperature, the set of initial values of the discharge temperature equal to the set of measurements of the discharge temperature by adjusting the set of initial values of the suction temperature, and determining the set of theoretical values of the suction temperature to be equal to the adjusted set of initial values of the suction temperature;

wherein determining the set of theoretical values of the discharge temperature comprises:

determining a set of entropy values of the suction-side refrigerant and a set of enthalpy values of the suction-side refrigerant on the basis of the set of measurements of the suction pressure and of the suction temperature;

determining a set of isentropic discharge enthalpy values on the basis of the set of measurements of the discharge pressure and the set of entropy values of the suction-side refrigerant;

determining a set of actual values of the discharge enthalpy of the compressor on the basis of the set of isentropic discharge enthalpy values, the isentropic efficiency, and the set of enthalpy values of the suction-side refrigerant; and

determining the set of theoretical values of the discharge temperature on the basis of the set of measurements of the discharge pressure and the set of actual values of the discharge enthalpy of the compressor;

wherein the method further comprises:

setting, in response to detecting that an abnormality in the abnormal set of measurements disappears for a second predetermined time period, the set of theoretical values to be equal to the corresponding set of measurements;

wherein detecting that the abnormality in the abnormal set of measurements disappears comprises:

detecting that the number of successive measurements among the abnormal set of measurements that are outside the preset safety range is less than or equal to a preset threshold; and

detecting that the number of measurements among the abnormal set of measurements that are obtained within the first predetermined time period and outside the preset safety range is less than or equal to a preset threshold.

4. An apparatus for improving the operating reliability of a compressor, the apparatus comprising:

an obtaining unit configured to obtain, in real time, a set of measurements of a suction pressure, of a suction temperature, of a discharge pressure, and of a discharge temperature of the compressor;

a detection unit configured to detect whether the set of measurements of the suction temperature and of the discharge temperature are abnormal; and

a processing unit configured to set, in response to detecting that the set of measurements of the suction temperature or of the discharge temperature is abnormal, the abnormal set of measurements to be equal to a set of theoretical values, wherein the set of theoretical values is determined at least in part on the basis of the sets of measurements that are not abnormal.

5. The apparatus according to claim 4, wherein the processing unit is further configured to:

set, in response to detecting that the set of measurements of the suction temperature is abnormal, the abnormal set of measurements of the suction temperature to be equal to a set of theoretical values of the suction temperature, wherein the set of theoretical values of the suction temperature is determined at least in part on the basis of the set of measurements of the suction pressure, of the discharge temperature, and of the discharge pressure of the compressor; and

set, in response to detecting that the set of measurements of the discharge temperature is abnormal, the abnormal set of measurements of the discharge temperature to be equal to a set of theoretical values of the discharge temperature, wherein the set of theoretical values of the discharge temperature is determined at least in part on the basis of the set of measurements of the suction pressure, of the suction temperature, and of the discharge pressure of the compressor.

6. The apparatus according to claim 4, wherein the detection unit determines that the set of measurements of the suction temperature or of the discharge temperature is abnormal based on:

detecting that the number of successive measurements among the set of measurements of the suction temperature or of the discharge temperature that are outside a preset safety range is greater than a preset threshold; and/or

detecting that the number of measurements among the set of measurements of the suction temperature or of the discharge temperature that are obtained within a first predetermined time period and outside the preset safety range is greater than a preset threshold;

wherein the processing unit is configured to determine the set of theoretical values of the suction temperature by:

creating a set of initial values of the suction temperature;

determining a set of initial values of an entropy of a suction-side refrigerant and a set of initial values of an enthalpy of the suction-side refrigerant on the basis of the set of measurements of the suction pressure and the set of initial values of the suction temperature;

determining a set of initial values of an isentropic discharge enthalpy on the basis of the set of measurements of the discharge temperature and the set of initial values of the entropy of the suction-side refrigerant;

determining a set of initial values of a discharge enthalpy of the compressor on the basis of the set of initial values of the isentropic discharge enthalpy, an isentropic efficiency, and the set of initial values of the enthalpy of the suction-side refrigerant;

determining a set of initial values of the discharge temperature on the basis of the set of measurements of the discharge pressure and the set of initial values of the discharge enthalpy of the compressor; and

comparing the set of initial values of the discharge temperature with the set of measurements of the discharge temperature and determining the set of theoretical values of the suction temperature on the basis of a comparison result;

wherein the processing unit is configured to determine the set of theoretical values of the suction temperature on the basis of the comparison result by:

determining, if the set of initial values of the discharge temperature is equal to the set of measurements of the discharge temperature, the set of theoretical values of the suction temperature to be equal to the set of initial values of the suction temperature; and

making, if the set of initial values of the discharge temperature is not equal to the set of measurements of the discharge temperature, the set of initial values of the discharge temperature equal to the set of measurements of the discharge temperature by adjusting the set of initial values of the suction temperature, and determining the set of theoretical values of the suction temperature to be equal to the adjusted set of initial values of the suction temperature;

wherein the processing unit is configured to determine the set of theoretical values of the discharge temperature by:

determining a set of entropy values of the suction-side refrigerant and a set of enthalpy values of the suction-side refrigerant on the basis of the set of measurements of the suction pressure and of the suction temperature;

determining a set of isentropic discharge enthalpy values on the basis of the set of measurements of the discharge pressure and the set of entropy values of the suction-side refrigerant;

determining a set of actual values of the discharge enthalpy of the compressor on the basis of the set of isentropic discharge enthalpy values, the isentropic efficiency, and the set of enthalpy values of the suction-side refrigerant; and

determining the set of theoretical values of the discharge temperature on the basis of the set of measurements of the discharge pressure and the set of actual values of the discharge enthalpy of the compressor;

wherein the processing unit is further configured to:

set, in response to detecting that an abnormality in the abnormal set of measurements disappears for a second predetermined time period, the set of theoretical values to be equal to the corresponding set of measurements,

wherein the detection unit determines that the abnormality in the abnormal set of measurements disappears is detected based on:

detecting that the number of successive measurements among the abnormal set of measurements that are outside the preset safety range is less than or equal to a preset threshold; and

detecting that the number of measurements among the abnormal set of measurements that are obtained within the first predetermined time period and outside the preset safety range is less than or equal to a preset threshold.

7. A computer storage medium, comprising instructions, wherein when the instructions are run, a method according to any one of claims 1 to 3 is performed.

8. A computer device, comprising a memory, a processor, and a computer program stored on the memory and executable on the processor, wherein the processor, when executing the program, implements a method according to any one of claims 1 to 3.

9. An air conditioning system, comprising an apparatus for improving the operating reliability of a compressor according to any one of claims 4 to 6.

FIG. 1

*FIG. 2*

FIG. 3

**410**

**420**

| Processor |

| Memory |
| Computer program | **430** |

**400**

*FIG. 4*

## INTERNATIONAL SEARCH REPORT

| International application No. |
|---|
| **PCT/CN2023/122474** |

**A. CLASSIFICATION OF SUBJECT MATTER**

B60H1/32(2006.01)i;  B60H1/00(2006.01)i;  F25D11/00(2006.01)i;  F24F11/00(2018.01)i

According to International Patent Classification (IPC) or to both national classification and IPC

**B. FIELDS SEARCHED**

Minimum documentation searched (classification system followed by classification symbols)

IPC:B60H1,F25D11,F24F11

Documentation searched other than minimum documentation to the extent that such documents are included in the fields searched

Electronic data base consulted during the international search (name of data base and, where practicable, search terms used)

CJFD, CNTXT, DWPI, ENTXTC: 不间断, 持续, 工作, 运行, 关机, 频繁, 停机, 停止, 故障, 异常, 正常, 报警, 警报, 获取, 监测, 检测, 集合, 理论值, 温度, 压力, 压缩机, 修正, abnormal, error, fault, mistake, temperature, stop+, detect+, obtain+, set+

**C. DOCUMENTS CONSIDERED TO BE RELEVANT**

| Category* | Citation of document, with indication, where appropriate, of the relevant passages | Relevant to claim No. |
|---|---|---|
| PX | CN 115626033 A (NIO AUTOMOBILE TECHNOLOGY (ANHUI) CO., LTD.) 20 January 2023 (2023-01-20) <br> claims 1-9 | 1-9 |
| X | CN 114754528 A (ZHUHAI GREE ELECTRIC APPLIANCES INC.) 15 July 2022 (2022-07-15) <br> claims 1-12, and description, specific embodiments, and figures 1-5 | 1, 2, 4, 5, 7-9 |
| A | CN 110686356 A (ZHUHAI GREE ELECTRIC APPLIANCES INC.) 14 January 2020 (2020-01-14) <br> entire document | 1-9 |
| A | CN 111059692 A (ZHUHAI GREE ELECTRIC APPLIANCES INC.) 24 April 2020 (2020-04-24) <br> entire document | 1-9 |
| A | CN 115246295 A (BEIQI FOTON MOTOR CO., LTD.) 28 October 2022 (2022-10-28) <br> entire document | 1-9 |

☑ Further documents are listed in the continuation of Box C.   ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **27 October 2023** | **12 November 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/122474** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 115264756 A (QINGDAO HISENSE HITACHI AIR CONDITIONING SYSTEM CO., LTD.) 01 November 2022 (2022-11-01) <br> entire document | 1-9 |
| A | KR 20080040196 A (DAEWOO ELECTRONICS CORP.) 08 May 2008 (2008-05-08) <br> entire document | 1-9 |
| A | US 2020348037 A1 (SAMSUNG ELECTRONICS CO., LTD.) 05 November 2020 (2020-11-05) <br> entire document | 1-9 |

Form PCT/ISA/210 (second sheet) (July 2022)

**INTERNATIONAL SEARCH REPORT**
**Information on patent family members**

International application No.

**PCT/CN2023/122474**

| Patent document cited in search report | | | Publication date (day/month/year) | Patent family member(s) | | | Publication date (day/month/year) |
|---|---|---|---|---|---|---|---|
| CN | 115626033 | A | 20 January 2023 | None | | | |
| CN | 114754528 | A | 15 July 2022 | None | | | |
| CN | 110686356 | A | 14 January 2020 | None | | | |
| CN | 111059692 | A | 24 April 2020 | None | | | |
| CN | 115246295 | A | 28 October 2022 | None | | | |
| CN | 115264756 | A | 01 November 2022 | None | | | |
| KR | 20080040196 | A | 08 May 2008 | None | | | |
| US | 2020348037 | A1 | 05 November 2020 | KR | 20190045493 | A | 03 May 2019 |
| | | | | KR | 102391331 | B1 | 28 April 2022 |
| | | | | US | 11384949 | B2 | 12 July 2022 |
| | | | | WO | 2019083186 | A1 | 02 May 2019 |

Form PCT/ISA/210 (patent family annex) (July 2022)